# EUROPÄISCHE PATENTSCHRIFT

(11) **EP 3 418 033 B1**
(45) Veröffentlichungstag und Bekanntmachung des Hinweises auf die Patenterteilung: **01.01.2020**
(21) Anmeldenummer: 17450006.6
(22) Anmeldetag: 19.06.2017
(51) Int. Cl.: B33Y 10/00, B33Y 30/00, B29C 64/124, B29C 64/35, B29C 64/236, B29C 64/223

(54) **VERFAHREN UND VORRICHTUNG ZUR LITHOGRAPHIEBASIERTEN GENERATIVEN FERTIGUNG VON DREIDIMENSIONALEN FORMKÖRPERN**
METHOD AND DEVICE FOR LITHOGRAPHY-BASED GENERATIVE PRODUCTION OF THREE-DIMENSIONAL FORMS
PROCÉDÉ ET DISPOSITIF DE FABRICATION GÉNÉRATIVE PAR LITHOGRAPHIE DE FORMES TRIDIMENSIONNELLES

(43) Veröffentlichungstag der Anmeldung: 26.12.2018
(73) Patentinhaber: Cubicure GmbH, 1230 Wien (AT)
(72) Erfinder: Gmeiner, Robert, A-1040 Wien (AT); Förster-Romswinckel, Thomas, A-1130 Wien (AT); Neubauer, Philipp, A-2564 Weissenbach (AT)
(74) Vertreter: Keschmann, Marc

(56) Entgegenhaltungen:
- WO-A1-2010/045951
- US-A1- 2014 265 032

## Beschreibung

Die Erfindung betrifft ein Verfahren nach Anspruch 1 zur lithographiebasierten generativen Fertigung von dreidimensionalen Formkörpern, bei dem eine Bauplattform in Abstand von einer zumindest bereichsweise für die Strahlung einer Strahlungsquelle durchlässige Materialauflage für ein durch Einwirkung der Strahlung verfestigbares Material positioniert wird, wobei die Materialauflage zwischen einer ersten und einer zweiten Position translatorisch bewegt wird.

Die Erfindung betrifft weiters eine Vorrichtung nach Anspruch 12 zur Durchführung eines solchen Verfahrens.

In der lithographischen oder stereolithographischen additiven Fertigung wird photopolymerisierbares Ausgangsmaterial schichtweise zu Formkörpern verarbeitet. Die Schichtinformation wird dabei orts- und zeitselektiv entweder durch eine optische Maske, eine projizierte Bildfläche oder durch Rastern mittels Laserstrahls auf das zu polymerisierende Material übertragen. Hierbei kommt es zu grundlegenden Unterscheidungen in der Wahl der Belichtungs- und Strukturierungsmethodik: Es kann einerseits ein (Tauch-)Becken eines photopolymerisierbaren Materials von oben belichtet werden, wobei das strukturierte Objekt während der Herstellung sukzessive in das flüssige Material eintaucht (SLA), oder aber es wird ein Materialreservoir (gefüllte Materialwanne) von unten durch einen transparenten Wannenboden hindurch belichtet, wobei das Objekt von oben aus dem Materialbad entnommen wird (DLP, Laser-Stereolithographie). In letzterem Fall wird das Objekt durch Auf- und Ab-Bewegen Schicht für Schicht strukturiert, wobei der jeweilige Abstand zwischen Objekt und Materialwannenboden eine hochpräzise Schichtdicke garantiert. In neuartigen Verfahren kann diese Art der Strukturierung auch kontinuierlich (kein alternierende Auf- Ab-Bewegung mehr) erfolgen, wobei dann noch weitere spezielle Anforderungen an den Wannenboden gestellt werden müssen. Ein großer Vorteil der Belichtung durch die Materialwanne gegenüber des beschriebenen Tauchprozesses (SLA) ist vor allem der weitaus geringere Materialbedarf zum Starten des Prozesses. Da bei Tauchprozessen viele Liter des reaktiven Verbrauchsmaterial benötigt werden, sind diese bei Handhabung und Prozesskosten inhärent im Nachteil.

Allen genannten Prozessmethoden gemein ist die hohe geometrische Qualität der additiv strukturierten Erzeugnisse. Vor allem im Bereich der Kunststofftechnik ist diese Oberflächenqualität entscheidend, um mit gängigen Verfahren wie z.B. Spritzgussanwendungen konkurrieren zu können. Lithographie-basierter 3D-Druck hebt sich also bezüglich Oberflächen- und Formqualität deutlich von allen anderen verfügbaren 3D-Druckprozessen ab. Als diesbezüglich nachteilig sind die hohen Anforderungen an die Viskosität der Ausgangsmaterialien (Photopolymergemische) zu nennen. Die aktuell geforderte dynamische Viskosität im Verarbeitungsstadium sollte deshalb einige Pa.s (Pascal-Sekunden) nicht überschreiten. Diese Hürde der schichtweisen Verarbeitung schränkt die Auswahl infrage kommender Photopolymere drastisch ein, wodurch die größte Schwäche Lithographie basierter additiver Schichtprozesse bedingt wird: die oftmals stark eingeschränkten Materialeigenschaften der verarbeiteten Kunststoffe.

Gerade für technische Anwendungen, aber auch im Bereich von End-User Produkten ist neben der geometrischen Qualität eines Objekts vor allem seine Materialqualität entscheidend. Bei additiv verarbeiteten Kunststoffen äußern sich bekannte Defizite vor allem bei der Temperaturfestigkeit (starker Verlust der Steifigkeit/E-Modul bei Temperaturerhöhung - meist bereits ab 40-50°C) bzw. der Zähigkeit (Schlagzähigkeit/ Widerstand gegen fatalen Bruch oder Riss) bei Umgebungstemperatur. Stereolithographisch verarbeitbare Materialien, welche eine Kombination aus Festigkeit, Zähigkeit sowie ausreichender Temperaturfestigkeit (z.B. ausreichend Steifigkeit bis 80°C) aufweisen, gelten aktuell als Voraussetzung für eine erfolgreiche und weitreichende wirtschaftliche Integration additiver Stereolithographieprozesse in die bestehende Produktionstechnologie. Solche Materialien sind aber bis dato nicht oder nur teilweise in der gewünschten Qualität verfügbar.

Um nun neuartige Photopolymersysteme für Stereolithographieprozesse zu entwickeln, sind vor allem die erwähnten Viskositätsanforderungen bekannter Verarbeitungsprozesse problematisch. Als möglicher Ausweg hat sich eine Prozessführung bei erhöhter Temperatur bewährt. Durch bereits geringe Erhöhung der Prozesstemperatur gegenüber normaler Raumtemperatur (20°C) vermindert sich die Viskosität der allermeisten Photopolymere drastisch. Es wird dadurch eine erhebliche Vergrößerung der zur Auswahl stehenden Ausgangspolymersubstanzen erreicht, welche im Weiteren zu neuartigen 3D-Druckmaterialien führen werden.

Anwendungen beheizter Prozesssysteme sind bereits öffentlich bekannt. Eine weitere Möglichkeit der Verarbeitung höher viskoser Systeme besteht in der Prozessführung selbst, wo es beispielsweise darum gehen kann, bestehende Tauchsysteme (Materialwannen mit mehreren Millimetern oder Zentimetern Füllstandshöhe) durch anderweitige Methoden der Materialzuführung (z.B.: Beschichtungssysteme) zu ersetzen. Auch bei diesen Ansätzen können erhöhte Prozesstemperaturen einen entscheidenden Vorteil bringen, wobei jedoch immer auch die Temperatursensitivität des zu verarbeitenden Photopolymers bedacht werden muss. Eine aufwändige Beheizung einzelner Prozesselemente oder aber der ganzen Prozesskammer kann hier Abhilfe schaffen, resultiert aber oft auch in erheblichem mechatronischen Aufwand und kann bei falscher Implementierung die Langzeitstabilität des Photopolymergemisches herabsetzen und dadurch die Prozessstabilität erheblich gefährden.

Aus der US 2014/265032 A1 ist ein 3d-Druckverfahren der eingangs genannten Art bekannt, wobei eine Schicht von flüssigem Material auf einem transparenten Substrat aufgetragen wird und durch das transparente Substrat bestrahlt wird.

Das Dokument WO 2010/045951 A1 offenbart eine Vorrichtung und ein Verfahren zur Verarbeitung von lichtpolymerisierbarem Material zum schichtweisen Aufbau eines Formkörpers.

Ziel der vorliegenden Erfindung ist es daher, eine Prozessführung bei der Verarbeitung hochviskoser Harze zu finden, welche die Vorteile einer selektiven Beheizung einzelner Prozessabschnitte mit den Vorteilen einer definierten Materialzuführung in diese Prozesszone kombiniert und welche als langzeitstabiles Produktionssystem umgesetzt werden kann.

Zur Lösung dieser Aufgabe sieht die Erfindung bei einem Verfahren der eingangs genannte Art im Wesentlichen vor, dass Material mithilfe einer Materialeinbringungsvorrichtung während der Bewegung der Materialauflage von der ersten zur zweiten Position mit einer definierten Schichtdicke aufgetragen wird, anschließend das aufgebrachte Material zwischen der Bauplattform und der Materialauflage orts- und/oder zeitselektiv von der Strahlungsquelle bestrahlt und verfestigt wird und anschließend Material mithilfe der Materialeinbringungsvorrichtung während der Bewegung der Materialauflage von der zweiten zur ersten Position von der Materialauflage abgetragen wird.

Die vorliegende Erfindung besteht aus einem Beschichtungs- und Umlaufprozess, bei dem eine photosensitive Substanz in Form von Dünnschichten einer Belichtungszone zugeführt werden kann. Der Prozess bedient sich dabei einer translatorisch verfahrbaren Materialauflage, die bspw. als Materialwanne ausgebildet ist, welche hauptsächlich als Trägerplatte für die prozessrelevanten Dünnschichten des photosensitiven Materials dient. Auf diese verfahrbare Trägerplatte wird nun photopolymerisierbares Material zugeführt, wobei es sich dabei um reine photosensitive Mono- oder Oligomerverbindungen oder aber um ebensolche Verbindungen inklusive einer Photoinitiatorkomponente handeln kann. Darüber hinaus kann eine solche Verbindung auch mit organischen oder anorganischen Füllstoffen versehen sein und/oder weitere organische oder anorganische Additive oder sonstige Stoffe, Färbemittel, Absorber oder anderweitig funktionale oder nicht funktionale Inhaltsstoffe aufweisen. Es kann sich ferner auch um andere photopolymerisierbare Substanzen handeln, sofern eine lithographische Interaktion mit diesem Material im Wellenlängenbereich zwischen 150nm und 950nm möglich ist.

Das Material wird bevorzugt mithilfe einer ortsfesten Materialeinbringungsvorrichtung aufgetragen bzw. abgetragen und hat dabei eine, in Bezug auf die verfahrbare Materialauflage, fixe Prozessposition.

Bevorzugt ist vorgesehen, dass das Material mithilfe einer ersten und einer zweiten Rakel aufgetragen bzw. abgetragen wird.

Die erste Rakel wird bevorzugt vor oder während der Bewegung der Materialauflage von der zweiten zur ersten Position senkrecht zur Bewegungsrichtung der Materialauflage von der Materialauflage weg bewegt und bevorzugt während oder vor der Bewegung der Materialauflage von der ersten zur zweiten Position zur Einstellung der definierten Schichtdicke zur Materialauflage hin bewegt. Die erste Rakel ist dabei solcherart beschaffen, dass die Höhe der ersten Rakel in einer z-Richtung (senkrecht zu einer x-Richtung, in der die Materialauflage bewegt wird) variabel einstellbar ist, wobei diese Höheneinstellung sowohl durch aktive (z.B. einen Rakelmotor), als auch passive Prozessmechanismen gesteuert werden kann. Die erste Rakel kann bevorzugt in ihrer Höhe derart eingestellt werden, dass sie in der untersten Position keinen Rakelspalt zwischen der ersten Rakel und der Materialauflage zulässt, und somit die Materialeinbringungsvorrichtung vollständig geschlossen ist, oder aber dass sie in einer angehobenen Position eine Spalthöhe von wenigen Mikrometern bis hin zu mehreren Millimetern zulässt.

Die zweite Rakel bildet einen Abzugsmechanismus und ist entweder passiv oder aktiv in ihrer Zustellhöhe (z-Richtung) einstellbar. Bevorzugt ist vorgesehen, dass die zweite Rakel mithilfe eines Rückstellelements, bspw. einer Feder, in Anlage an die Materialauflage gehalten wird. Dadurch ist die Materialeinbringungsvorrichtung jederzeit gegenüber dem darin befindlichen photosensitiven Material zumindest teilweise abgedichtet.

Weiters ist bevorzugt vorgesehen, dass zwischen der ersten und der zweiten Rakel ein Materialreservoir gebildet wird. Besonders bevorzugt ist hierbei vorgesehen, dass während der Bewegung der Materialauflage von der zweiten zur ersten Position von der Materialauflage abgetragenes Material zumindest teilweise in das Materialreservoir rückgeführt wird. Hierbei ist besonders bevorzugt vorgesehen, dass das Material während der Bewegung der Materialauflage von der ersten zur zweiten Position aus dem Materialreservoir über einen zwischen der ersten Rakel und der Materialauflage definierten Spalt mit der durch den Spalt und der eingestellten translatorischen Verfahrgeschwindigkeit der Materialauflage definierten Schichtdicke aufgetragen wird.

Das erfindungsgemäße Verfahren sieht hierbei eine Linearbewegung der Materialauflage unter der Materialeinbringungsvorrichtung, also unter der ersten Rakel und der zweiten Rakel, in einer solchen Art vor, dass bei einer Hinfahrt der Materialauflage (also von der ersten Position in die zweite Position) eine definierte Dünnschicht des photopolymerisierbaren Materials auf die Materialauflage zumindest teilweise und an Teilen der Materialauflage aufgetragen wird und dass bei einer Rückfahrt der Materialauflage (also von der zweiten Position in die erste Position) der verbleibende photosensitive Materialfilm zumindest teilweise und an Teilen der Materialauflage abgezogen bzw. abgetragen wird, wodurch einerseits die Materialauflage im abgezogenen Teil eine reine oder zumindest teilweise gereinigte Oberfläche aufweist, und wodurch andererseits das zuvor verbliebene photosensitive Material zumindest teilweise wieder in das Materialreservoir zurückgeführt wird.

Die aufgetragene Dünnschicht des photosensitiven Materials wird bei Hinfahrt der Materialauflage einer Belichtungszone zugeführt, in welcher orts- und zeitselektive Belichtungsinformation von der dem Material abgeneigten Seite der Materialauflage zugeführt wird. In einer bevorzugten Ausführungsform geschieht dies beispielsweise von unten, wobei die Belichtungsinformation die Materialauflage passieren muss. Die Materialauflage ist zu diesem Zwecke als gegenüber der verwendeten Lichtinformation transparent oder zumindest teiltransparent ausgeführt. Nach Belichtung und selektiver Aushärtung des photopolymerisierbaren Materials wird dieses von der Materialauflage abgezogen, wodurch unpolymerisierte Reste des photosensitiven Materials in Form einer unterbrochenen Dünnschicht, oder aber in Form von Materialanhäufungen, Materialinseln oder sonstiger Schichtmuster vorliegt. Bei der Rückfahrt der Materialauflage wird dieses Material erneut dem Materialreservoir zugeführt. Um dies zu erleichtern, kann die erste Rakel während der Rückfahrt der Materialauflage aktiv oder passiv angehoben werden, um das Passieren der nicht polymerisierten Materialreste unterhalb der ersten Rakelklinge zu erleichtern. Nach Beendigung der Rückfahrt der Materialauflage kann die erste Rakel unmittelbar und aktiv oder passiv abgesenkt werden, um ein Auslaufen des photopolymerisierbaren Materials aus dem Materialreservoir zu verhindern. Bei der Rückfahrt der Materialauflage wird das photosensitive Material mithilfe der zweiten Rakel vom Boden der Materialauflage abgelöst, wodurch es, zumindest temporär, im Materialreservoir verbeiben kann.

Der beschriebene Vorgang kann beliebig oft wiederholt werden, wodurch stets eine frisch aufgebrachte Schicht an photopolymerisierbarem Material auf die Materialauflage aufgetragen und diese dann der Belichtungszone zugeführt werden kann. Die Höhe bzw. Stärke dieser aufgebrachten photosensitiven Materialschicht lässt sich nun durch die Höhenverstellung der ersten Rakel, sowie der linearen Verfahrgeschwindigkeit der Materialauflage stufenlos einstellen. Beispielsweise liegen die Möglichkeiten der Höheneinstellung der photosensitiven Schicht im Bereich von einigen wenigen Mikrometern bis hin zu einigen Millimetern. Die schlussendlich erreichbare Schichtdicke des photosensitiven Materials hängt darüber hinaus von der Viskosität des photosensitiven Materials, sowie dessen Fließeigenschaften ab, welche ihrerseits wiederum zumeist temperaturabhängig sind. Um diesem Aspekt gerecht zu werden, ist bevorzugt vorgesehen, dass das Material in der Materialeinbringungsvorrichtung erwärmt wird. Weiters können in einer bevorzugten Ausführungsform alle relevanten Prozessteile, wie etwa die erste und/oder die zweite Rakel und/oder auch die Materialauflage selektiv und/oder individuell anpassbar beheizbar ausgeführt werden.

Die für den eigentlichen stereolithographischen Druckprozess verwendete Bauplattform, welche den zur Polymerisation verwendeten Schichtspalt mechanisch einstellt (entlang der z-Achse) und welche nach der Polymerisation den Abzug der selektiv polymerisierten Materialschichten von der linear verfahrbaren Materialauflage gewährleistet, ist bevorzugt beheizbar ausgeführt.

Während des beschriebenen Prozesses befindet sich bevorzugt stets photosensitives Vorratsmaterial im Materialreservoir. Durch die alternierende lineare Bewegung der Materialauflage unter dem Materialreservoir kommt es zu einer zyklischen Bewegung des photosensitiven Vorratsmaterials im Materialreservoir in Form von beweglichen oder umlaufenden Materialwellen oder Materialwalzen des photosensitiven Materials. Zur Optimierung der Prozesskontrolle ist es nun vorteilhaft, den Materialstand des photosensitiven Vorratsmaterials kontinuierlich oder in definierten Intervallen aktiv oder passiv zu erfassen, was im erfindungsgemäßen Ausführungsbeispiel mithilfe eines Ultraschallsensors, optischen Sensors, oder berührenden Sensors erfolgen kann. Auch andere, nicht genannte Feedbacksysteme, wie Schalter, Taster, Füllstandssonden oder ähnliches können zur Messung des Füllstandes des photosensitiven Vorratsmaterials verwendet werden. Zur Aufrechterhaltung des gewünschten Füllstandes des photosensitiven Vorratsmaterials ist bevorzugt vorgesehen, dass mithilfe einer Fördereinrichtung Material in das Materialreservoir eingebracht wird. Beispielsweise kann vorgesehen sein, dass kontinuierlich, oder in gewünschten zeitlichen Abständen neues photosensitives Material dem Materialreservoir zugeführt werden kann. Diese Fördereinrichtung kann selektiv und individuell beheizbar ausgeführt sein.

Die linear verfahrende Materialauflage kann im Weiteren auch den gewünschten Ablöseprozess des selektiv ausgehärteten photosensitiven Materials von der Materialauflage in der Belichtungszone aktiv oder passiv unterstützen, indem die lineare Bewegung der Materialauflage kombiniert mit einer aktiven oder passiven Abkippbewegung des gesamten Prozessaufbaus relativ zur Bauplattform oder aber auch kombiniert mit einer aktiven oder passiven Abkippbewegung der Bauplattform selbst relativ zum Prozessaufbau, zu einem definiert oder undefiniert mehrachsigen Ablöseprozess des ausgehärteten photosensitiven Materials von der Materialauflage führt, wobei eine solch kombinierte Ablösebewegung einem idealen Abschälprozess möglichst nahe kommt. Bevorzugt ist daher vorgesehen, dass die Bauplattform während der Bewegung der Materialauflage von der zweiten zur ersten Position kippt. In einer bevorzugten Ausführung wird dieser Abschälprozess der selektiv ausgehärteten photosensitiven Materialschicht durch den linearen Hub der Bauplattform (in z-Richtung), die passive oder aktive Drehung der Bauplattform um einen mit der Bauplattform mitgeführten Drehpunkt und einer aktiven oder passiven linearen Translationsbewegung der Materialauflage determiniert, welche in Summe einen multiaxialen Abschälprozess erlauben. Zur Unterstützung dieses Abschälvorganges kann die Materialauflage mit einer speziellen Antihaftbeschichtung versehen sein und/oder aus einem Laminat verschiedenster, für die verwendete Arbeitswellenlänge des photopolymerisierbaren Belichtungsprozesses transparenter, oder zumindest teiltransparenter Werkstoffe bestehen.

Die beschriebene, erfindungsgemäße Prozessführung erlaubt die präzise Verarbeitung hochviskoser photosensitiver Ausgangssubstanzen, welche auch ein hohes Molekulargewicht aufweisen können und welche bei Raumtemperatur auch als nicht fließfähig oder sogar als feste Körper vorliegen können. Im Weiteren kann durch das beschriebene Nachfüllsystem hohe Prozesssicherheit gewährt werden, da sich nur solche Mengen an photosensitivem Material in der Prozesszone aufhalten müssen, wie zu einem stabilen Druckprozess nötig sind. Weiteres photosensitives Vorratsmaterial kann bis zu seinem Einsatz aus der Prozesszone herausgehalten werden und etwaige negative Langzeiteinflüsse durch die Prozesstemperatur oder andere Umwelteinflüsse können weitestgehend verhindert werden. Die Zuführung des photosensitiven Materials zur Belichtungszone in definierten Dünnschichten auf der Materialauflage ermöglicht weiters die Kontrolle über mögliche Lufteinschlüsse in einer Schicht des ausgehärteten Photopolymers. Über die lineare Verfahrgeschwindigkeit der Materialauflage, den Füllstand des photosensitiven Materials im Materialreservoir sowie über die Verfahrhöhe der Rakel lassen sich auch die zyklisch revolvierenden Materialwalzen im Materialreservoir insofern beeinflussen, als dass die Durchmischung zwischen frischem und bereits von der Materialauflage abgezogenem photosensitiven Material optimiert, sowie die unerwünschte Einbringung von Luft- oder Gasblasen in den Materialvorrat im Materialreservoir minimiert werden können.

Gemäß einem weiteren Aspekt der Erfindung ist eine Vorrichtung zur lithographiebasierten generativen Fertigung von dreidimensionalen Formkörpern vorgesehen, umfassend eine Strahlungsquelle elektromagnetischer Strahlung, eine zumindest bereichsweise für die Strahlung der Strahlungsquelle durchlässige Materialauflage für ein durch Einwirkung der Strahlung verfestigbares Material, eine Bauplattform, die beabstandet von der Materialauflage gehalten ist, wobei die Materialauflage zwischen einer ersten und einer zweiten Position translatorisch bewegbar ist, dadurch gekennzeichnet, dass eine Materialeinbringungsvorrichtung vorgesehen ist, die ausgebildet ist, um Material während der Bewegung der Materialauflage von der ersten zur zweiten Position mit einer definierten Schichtdicke aufzutragen und Material während der Bewegung der Materialauflage von der zweiten zur ersten Position von der Materialauflage abzutragen.

Bevorzugt ist vorgesehen, dass die Materialeinbringungsvorrichtung zumindest eine erste und eine zweite Rakel aufweist, wobei bevorzugt die erste Rakel senkrecht zur Bewegungsrichtung der Materialauflage höhenverstellbar ist.

Weiters ist bevorzugt vorgesehen, dass die zweite Rakel mit einem Rückstellelement, bspw. einer Feder, zusammenwirkt.

In einer bevorzugten Ausführung ist vorgesehen, dass die Bauplattform kippbar angeordnet ist.

Bevorzugt ist vorgesehen, dass die Materialeinbringungsvorrichtung eine Heizeinrichtung zum Erwärmen des Materials aufweist.

Weiters ist bevorzugt vorgesehen, dass zwischen der ersten und der zweiten Rakel, die vorzugsweise parallel zueinander angeordnet sind, ein Materialreservoir gebildet ist.

Bevorzugt ist vorgesehen, dass das Materialreservoir mit einer Fördereinrichtung verbunden ist, sodass Material in das Materialreservoir eingebracht werden kann.

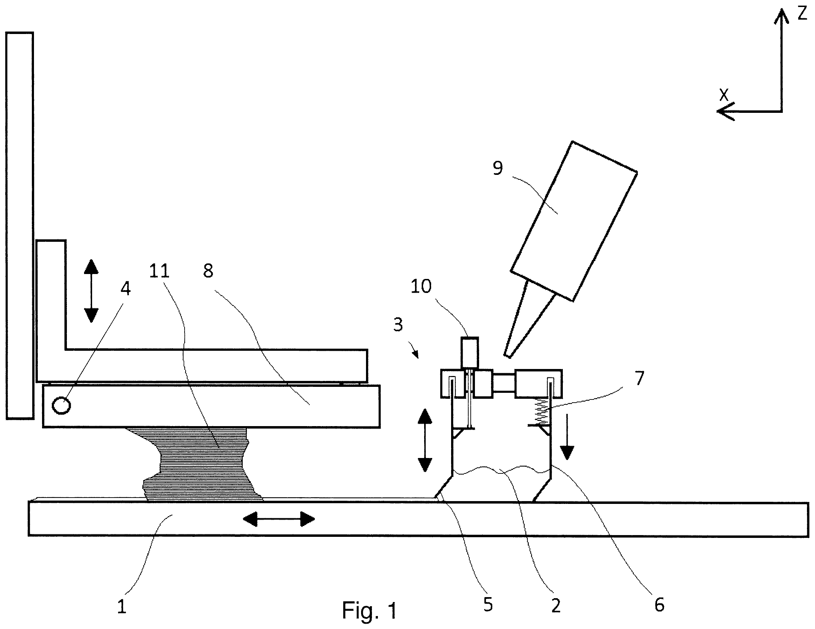

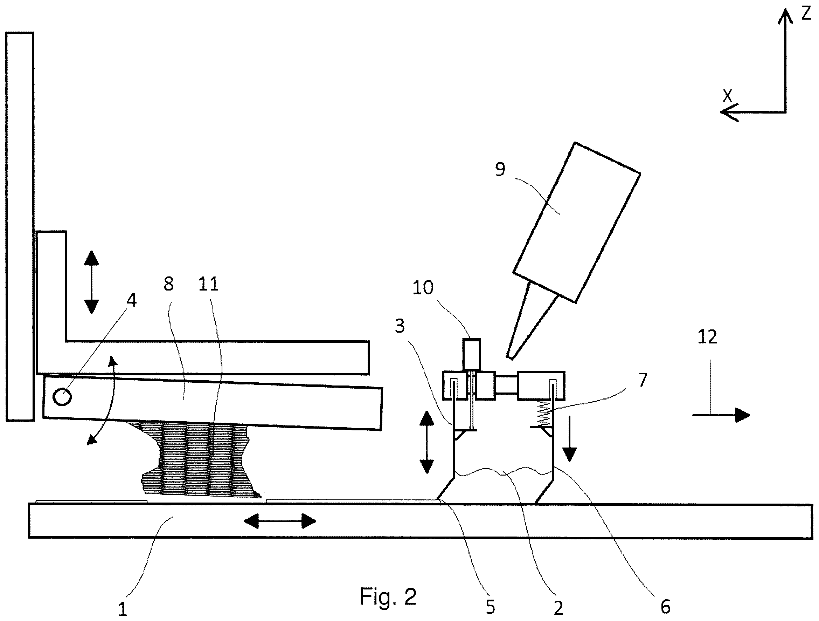

Die Erfindung wird nachfolgend anhand von in der Zeichnung schematisch dargestellten Ausführungsbeispielen näher erläutert. In dieser zeigen Fig. 1 und 2 schematische seitliche Schnittansichten einer erfindungsgemäßen Vorrichtung in aufeinanderfolgenden Phasen des Verfahrensablaufs.

In Fig. 1 ist mit 1 eine Materialauflage bezeichnet, auf der eine Materialschicht 11 angeordnet ist. Beabstandet von der Materialauflage 1 ist eine Bauplattform 8 angeordnet, die in z-Richtung höhenverstellbar ist und um die Achse 4 kippbar gelagert ist. Zwischen der Bauplattform 8 und der Materialauflage 1 sind bereits einige Materialschichten 11 aufgebaut. Die Materialauflage 1 ist entlang der, zur z-Richtung senkrechten, x-Richtung translatorisch bewegbar.

Weiters ist eine Materialeinbringungsvorrichtung 3 vorgesehen, die eine erste Rakel 5 und eine zweite Rakel 6 umfasst. Die erste Rakel 5 ist mithilfe eines Rakelmotors 10 in z-Richtung höhenverstellbar und die zweite Rakel 6 weist eine Feder 7 auf, die die zweite Rakel 6 in z-Richtung in Anlage an die Materialauflage 1 hält. Zwischen den beiden Rakeln 5,6 ist ein Materialreservoir 2 ausgebildet, das mithilfe einer Fördereinrichtung 9 mit Material versorgt werden kann.

In der in Fig. 1 dargestellten Phase des Verfahrens befindet sich die Materialauflage 1 in der zweiten Position. Die Bauplattform 8 ist in Richtung der Materialauflage 1 abgesenkt, sodass eine neue Materialschicht 11 gebildet werden kann, indem die Materialschicht 11 auf der Materialauflage 1 mithilfe einer nicht dargestellten Strahlungsquelle von unter durch die Materialauflage 1 hindurch ortsselektiv bestrahlt und verfestigt wird. Die Materialschicht 11 wurde während der Bewegung der Materialauflage 1 in die zweite Position durch die erste Rakel 5 aufgetragen.

In Fig. 2 ist die Phase nach Beendigung der Verfestigung der Materialschicht 11 dargestellt. Die Materialauflage 1 bewegt sich nunmehr in Richtung des Pfeils 12 von der zweiten Position weg in Richtung zur ersten Position. Gleichzeitig wird die Bauplattform 8 leicht in z-Richtung gehoben, wobei kombinierte Abhebebewegung der Bauplattform 8 und die Bewegung der Materialauflage 1 in Richtung des Pfeils 12 zu einem Kippen der Bauplattform 8 um die Achse 4 führt, sodass eine multiaxiale Ablösung der fertigen Materialschichten 11 von der Materialauflage 1 nach Art eines Abschälprozesses begünstigt wird. Zu diesem Zweck kann die Position der Achse 4 an der Bauplattform 8 auch an der in x-Richtung gegenüberliegenden Seite der Bauplattform 8 angeordnet sein, sofern dies den Abschälprozess zusätzlich begünstigt. Das auf der Materialauflage 1 übriggebliebene Material 11 wird bei der Bewegung der Materialauflage von der zweiten in die erste Position durch die zweite Rakel 6 abgetragen und dadurch wieder im Materialreservoir 2 gesammelt und gegebenenfalls durch frisches Material durch die Fördereinrichtung ergänzt, sodass jederzeit ausreichend Material zur Verfügung steht.

Nachdem die Materialschicht 11 durch die zweite Rakel 6 abgetragen wurde und die Materialauflage 1 in der ersten Position angekommen ist, wird erneut durch ein Bewegen der Materialauflage 1 entgegen der Richtung des Pfeils 12 hin zur zweiten Position durch die erste Rakel 5 eine Materialschicht 11 aus dem Materialreservoir 2 aufgetragen, bis die in Fig. 1 dargestellte zweite Position erreicht ist. Danach wird die Bauplattform bzw. der aus den bereits verfestigten Schichten 11 geformte Baukörper in die Materialschicht zur Einstellung der zu verfestigenden Schichtdicke abgesenkt, worauf eine weitere Belichtung und Verfestigung der Materialschicht 11 durchgeführt werden kann.

## Patentansprüche

1. Verfahren zur lithographiebasierten generativen Fertigung von dreidimensionalen Formkörpern, bei dem eine Bauplattform (8) in Abstand von einer zumindest bereichsweise für die Strahlung einer Strahlungsquelle durchlässige Materialauflage (1) für ein durch Einwirkung der Strahlung verfestigbares Material positioniert wird, wobei die Materialauflage (1) zwischen einer ersten und einer zweiten Position translatorisch bewegt wird,
wobei Material mithilfe einer Materialeinbringungsvorrichtung (3) während der Bewegung der Materialauflage (1) von der ersten zur zweiten Position mit einer definierten Schichtdicke aufgetragen wird, anschließend das aufgebrachte Material zwischen der Bauplattform (8) und der Materialauflage (1) orts- und/oder zeitselektiv von der Strahlungsquelle bestrahlt und verfestigt wird und anschließend Material mithilfe der Materialeinbringungsvorrichtung (3) während der Bewegung der Materialauflage (1) von der zweiten zur ersten Position von der Materialauflage (1) abgetragen wird.

2. Verfahren nach Anspruch 1, **dadurch gekennzeichnet, dass** das Material mithilfe einer ortsfesten Materialeinbringungsvorrichtung (3) aufgetragen bzw. abgetragen wird.

3. Verfahren nach einem der Ansprüche 1 oder 2, **dadurch gekennzeichnet, dass** das Material mithilfe einer ersten und einer zweiten Rakel (5,6) aufgetragen bzw. abgetragen wird.

4. Verfahren nach Anspruch 3, **dadurch gekennzeichnet, dass** die erste Rakel (5) vor oder während der Bewegung der Materialauflage (1) von der zweiten zur ersten Position senkrecht zur Bewegungsrichtung der Materialauflage (1) von der Materialauflage (1) weg bewegt wird und bevorzugt während oder vor der Bewegung der Materialauflage (1) von der ersten zur zweiten Position zur Einstellung der definierten Schichtdicke zur Materialauflage (1) hin bewegt wird.

5. Verfahren nach Anspruch 3 oder 4, **dadurch gekennzeichnet, dass** zwischen der ersten und der zweiten Rakel (5,6) ein Materialreservoir (2) gebildet wird.

6. Verfahren nach Anspruch 5, **dadurch gekennzeichnet, dass** das Material während der Bewegung der Materialauflage (1) von der ersten zur zweiten Position aus dem Materialreservoir (2) über einen zwischen der ersten Rakel (5) und der Materialauflage (1) definierten Spalt mit der durch den Spalt und der translatorischen Verfahrgeschwindigkeit der Materialauflage (1) definierten Schichtdicke aufgetragen wird.

7. Verfahren nach Anspruch 5 oder 6, **dadurch gekennzeichnet, dass** mithilfe einer Fördereinrichtung Material in das Materialreservoir (2) eingebracht wird.

8. Verfahren nach einem der Ansprüche 3 bis 7, **dadurch gekennzeichnet, dass** die zweite Rakel (6) mithilfe eines Rückstellelements (7), bspw. einer Feder, in Anlage an die Materialauflage (1) gehalten wird.

9. Verfahren nach einem der Ansprüche 5 bis 8, **dadurch gekennzeichnet, dass** das während der Bewegung der Materialauflage (1) von der zweiten zur ersten Position von der Materialauflage (1) abgetragene Material zumindest teilweise in das Materialreservoir (2) rückgeführt wird.

10. Verfahren nach einem der Ansprüche 1 bis 9, **dadurch gekennzeichnet, dass** die Bauplattform (8) während der Bewegung der Materialauflage (1) von der zweiten zur ersten Position kippt.

11. Verfahren nach einem der Ansprüche 1 bis 10, **dadurch gekennzeichnet, dass** das Material in der Materialeinbringungsvorrichtung (3) erwärmt wird.

12. Vorrichtung zur lithographiebasierten generativen Fertigung von dreidimensionalen Formkörpern, insbesondere zur Durchführung eines Verfahrens nach einem der Ansprüche 1 bis 11, umfassend eine Strahlungsquelle elektromagnetischer Strahlung, eine zumindest bereichsweise für die Strahlung der Strahlungsquelle durchlässige Materialauflage (1) für ein durch Einwirkung der Strahlung verfestigbares Material, eine Bauplattform (8), die beabstandet von der Materialauflage (1) gehalten ist, wobei die Materialauflage (1) zwischen einer ersten und einer zweiten Position translatorisch bewegbar ist,
wobei
eine Materialeinbringungsvorrichtung (3) vorgesehen ist, die ausgebildet ist, um Material während der Bewegung der Materialauflage (1) von der ersten zur zweiten Position mit einer definierten Schichtdicke aufzutragen und Material während der Bewegung der Materialauflage (1) von der zweiten zur ersten Position von der Materialauflage (1) abzutragen.

13. Vorrichtung nach Anspruch 12, **dadurch gekennzeichnet, dass** die Materialeinbringungsvorrichtung (3) zumindest eine erste und eine zweite Rakel (5,6) aufweist, wobei bevorzugt die erste Rakel (5) senkrecht zur Bewegungsrichtung der Materialauflage (1) höhenverstellbar ist.

14. Vorrichtung nach Anspruch 13, **dadurch gekennzeichnet, dass** die zweite Rakel (6) mit einem Rückstellelement (7), bspw. einer Feder, zusammenwirkt.

15. Vorrichtung nach Anspruch 12 oder 13, **dadurch gekennzeichnet, dass** die Bauplattform (8) kippbar angeordnet ist.

16. Vorrichtung nach einem der Ansprüche 12 bis 15, **dadurch gekennzeichnet, dass** die Materialeinbringungsvorrichtung (3) eine Heizeinrichtung zum Erwärmen des Materials aufweist.

17. Vorrichtung nach einem der Ansprüche 13 bis 16, **dadurch gekennzeichnet, dass** zwischen der ersten und der zweiten Rakel (5,6) ein Materialreservoir (2) gebildet ist.

18. Vorrichtung nach Anspruch 17, **dadurch gekennzeichnet, dass** das Materialreservoir (2) mit einer Fördereinrichtung verbunden ist, sodass Material in das Materialreservoir (2) eingebracht werden kann.

## Claims

1. A method for the lithography-based generative production of three-dimensional shaped articles, in which a build platform (8) is positioned at a distance from a material support (1) permeable to the radiation of a radiation source in at least certain areas for a material solidifiable by exposure to said radiation, wherein the material support (1) is translationally moved between a first position and a second position, wherein material is applied at a defined layer thickness by means of a material introduction device (3) during the movement of the material support (1) from the first position to the second position, after this the applied material, between the build platform (8) and the material support (1), is location- and/or time-selectively irradiated by the radiation source and solidified, and subsequently material is removed from the material support (1) by means of the material introduction device (3) during the movement of the material support (1) from the second position to the first position.

2. A method according to claim 1, **characterized in that** the material is applied and removed by means of a stationary material introduction device (3).

3. A method according to any one of claim 1 or 2, **characterized in that** the material is applied and removed by means of a first and a second doctor blade (5,6).

4. A method according to claim 3, **characterized in that** the first doctor blade (5) is moved away from the material support (1) perpendicularly to the direction of movement of the material support (1) before or during the movement of the material support (1) from the second position to the first position, and, preferably during or before the movement of the material support (1) from the first position to the second position, is moved towards the material support (1) for adjusting the defined layer thickness.

5. A method according to claim 3 or 4, **characterized in that** a material reservoir (2) is formed between the first and the second doctor blades (5,6).

6. A method according to claim 5, **characterized in that** the material, during the movement of the material support (1) from the first position to the second position, is applied from the material reservoir (2) through a gap defined between the first doctor blade (5) and the material support (1) at the layer thickness defined by the gap and the translational moving speed of the material support (1).

7. A method according to claim 5 or 6, **characterized in that** material is introduced into the material reservoir (2) by means of a conveying device.

8. A method according to any one of claims 3 to 7, **characterized in that** the second doctor blade (6) is held in abutment on the material support (1) by means of a return device (7), e.g. a spring.

9. A method according to any one of claims 5 to 8, **characterized in that** the material removed from the material support (1) during the movement of the material support (1) from the second position to the first position is at least partially returned into the material reservoir (2).

10. A method according to any one of claims 1 to 9, **characterized in that** the build platform (8) tilts during the movement of the material support (1) from the second position to the first position.

11. A method according to any one of claims 1 to 10, **characterized in that** the material is heated in the material introduction device (3).

12. A device for the lithography-based generative production of three-dimensional shaped articles, in particular for carrying out a method according to any one of claims 1 to 11, comprising a radiation source of electromagnetic radiation, a material support (1) permeable to the radiation of the radiation source in at least certain areas for a material solidifiable by exposure to said radiation, a build platform (8) held at a distance from the material support (1), wherein the material support (1) is translationally movable between a first position and a second position, wherein a material introduction device (3) is provided, which is designed to apply material at a defined layer thickness during the movement of the material support (1) from the first position to the second position, and to remove material from the material support (1) during the movement of the material support (1) from the second position to the first position.

13. A device according to claim 12, **characterized in that** the material introduction device (3) comprises at least a first and a second doctor blade (5,6), the first doctor blade (5) preferably being height-adjustable perpendicularly to the direction of movement of the material support (1).

14. A device according to claim 13, **characterized in that** the second doctor blade (6) cooperates with a return element (7), e.g. a spring.

15. A device according to claim 12 or 13, **characterized in that** the build platform (8) is arranged to be tiltable.

16. A device according to any one of claims 12 to 15, **characterized in that** the material introduction device (3) comprises a heating device for heating the material.

17. A device according to any one of claims 13 to 16, **characterized in that** a material reservoir (2) is formed between the first and the second doctor blades (5,6).

18. A device according to claim 17, **characterized in that** the material reservoir (2) is connected to a conveying device so as to enable material to be introduced into the material reservoir (2) .

## Revendications

1. Procédé de fabrication générative par lithographie de corps moulés en trois dimensions, pour lequel une plateforme structurelle (8) est positionnée à distance d'une couche de matériau (1) perméable au moins par endroits pour le rayonnement d'une source de rayonnement pour un matériau consolidable sous l'action du rayonnement, dans lequel la couche de matériau (1) est déplacée de manière translatoire entre une première et une seconde position, dans lequel du matériau est appliqué à l'aide d'un dispositif d'introduction de matériau (3) pendant le mouvement de la couche de matériau (1) de la première à la seconde position avec une épaisseur de couche définie, puis le matériau appliqué est irradié et consolidé entre la plateforme structurelle (8) et la couche de matériau (1) de manière sélective en lieu et/ou temps par la source de rayonnement et ensuite du matériau est éliminé à l'aide du dispositif d'introduction de matériau (3) pendant le mouvement de la couche de matériau (1) de la seconde à la première position de la couche de matériau (1).

2. Procédé selon la revendication 1, **caractérisé en ce que** le matériau est appliqué ou éliminé à l'aide d'un dispositif d'introduction de matériau fixe (3).

3. Procédé selon l'une des revendications 1 ou 2, **caractérisé en ce que** le matériau est appliqué ou éliminé à l'aide d'une première et d'une seconde racle (5, 6).

4. Procédé selon la revendication 3, **caractérisé en ce que** la première racle (5) est déplacée avant ou pendant le mouvement de la couche de matériau (1) de la seconde position à la première position perpendiculairement au sens de déplacement de la couche de matériau (1) loin de la couche de matériau (1) et de préférence est déplacée pendant ou avant le mouvement de la couche de matériau (1) de la première à la seconde position pour le réglage de l'épaisseur de couche définie vers la couche de matériau (1).

5. Procédé selon la revendication 3 ou 4, **caractérisé en ce qu'**un réservoir de matériau (2) est formé entre la première et la seconde racle (5, 6).

6. Procédé selon la revendication 5, **caractérisé en ce que** le matériau est appliqué pendant le déplacement de la couche de matériau (1) de la première à la seconde position hors du réservoir de matériau (2) par le biais d'une fente définie entre la première racle (5) et la couche de matériau (1) avec l'épaisseur de couche définie par la fente et la vitesse de déplacement translatoire de la couche de matériau (1).

7. Procédé selon la revendication 5 ou 6, **caractérisé en ce que** du matériau est introduit dans le réservoir de matériau (2) à l'aide d'un dispositif de transport.

8. Procédé selon l'une des revendications 3 à 7, **caractérisé en ce que** la seconde racle (6) est maintenue à l'aide d'un élément de rappel (7) ou d'un ressort, en appui contre la couche de matériau (1).

9. Procédé selon l'une des revendications 5 à 8, **caractérisé en ce que** le matériau éliminé pendant le déplacement de la couche de matériau (1) de la seconde à la première position de la couche de matériau (1) est renvoyé au moins partiellement dans le réservoir de matériau (2).

10. Procédé selon l'une des revendications 1 à 9, **caractérisé en ce que** la plateforme structurelle (8) bascule pendant le mouvement de la couche de matériau (1) de la seconde à la première position.

11. Procédé selon l'une des revendications 1 à 10, **caractérisé en ce que** le matériau est réchauffé dans le dispositif d'introduction de matériau (3).

12. Dispositif de fabrication générative par lithographie de corps moulés en trois dimensions, en particulier pour la réalisation d'un procédé selon l'une des revendications 1 à 11, comprenant une source de rayonnement de rayonnement électromagnétique, une couche de matériau (1) perméable au moins par endroits pour le rayonnement de la source de rayonnement pour un matériau consolidable sous l'action du rayonnement, une plateforme structurelle (8) qui est maintenue à distance de la couche de matériau (1), dans lequel la couche de matériau (1) est mobile de manière translatoire entre une première et une seconde position,
dans lequel un dispositif d'introduction de matériau (3) est prévu, lequel est réalisé afin d'appliquer du matériau pendant le mouvement de la couche de matériau (1) de la première à la seconde position avec une épaisseur de couche définie et d'éliminer du matériau pendant le mouvement de la couche de matériau (1) de la seconde à la première position de la couche de matériau (1).

13. Dispositif selon la revendication 12, **caractérisé en ce que** le dispositif d'introduction de matériau (3) présente au moins une première et une seconde racle (5, 6), dans lequel de préférence la première racle (5) est réglable en hauteur perpendiculairement au sens de déplacement de la couche de matériau (1).

14. Dispositif selon la revendication 13, **caractérisé en ce que** la seconde racle (6) agit conjointement avec un élément de rappel (7), par exemple un ressort.

15. Dispositif selon la revendication 12 ou 13, **caractérisé en ce que** la plateforme structurelle (8) est agencée de manière à pouvoir basculer.

16. Dispositif selon l'une des revendications 12 à 15, **caractérisé en ce que** le dispositif d'introduction de matériau (3) présente un dispositif de chauffage pour le chauffage du matériau.

17. Dispositif selon l'une des revendications 13 à 16, **caractérisé en ce qu'**un réservoir de matériau (2) est formé entre la première et la seconde racle (5, 6).

18. Dispositif selon la revendication 17, **caractérisé en ce que** le réservoir de matériau (2) est raccordé à un dispositif de transport de sorte que du matériau puisse être introduit dans le réservoir de matériau (2).
